(19) Europäisches Patentamt
European Patent Office
Office européen des brevets

(11) Numéro de publication : **0 381 579 B1**

(12) # FASCICULE DE BREVET EUROPEEN

(45) Date de publication du fascicule du brevet : **29.06.94 Bulletin 94/26**

(51) Int. Cl.[5] : **G21C 19/46,** C22B 60/02, C22B 60/04

(21) Numéro de dépôt : **90400256.5**

(22) Date de dépôt : **30.01.90**

(54) **Procédé d'extraction de l'uranium (VI) et/ou du plutonium (IV) présents dans une solution aqueuse acide au moyen d'un mélange de N,N-dialkylamides, utilisable pour le retraitement de combustibles nucléaires irradiés.**

(30) Priorité : **01.02.89 FR 8901282**

(43) Date de publication de la demande : **08.08.90 Bulletin 90/32**

(45) Mention de la délivrance du brevet : **29.06.94 Bulletin 94/26**

(84) Etats contractants désignés : **DE GB**

(56) Documents cités :
**EP-A- 0 228 940**
**GB-A- 816 628**
**GB-A- 1 154 875**

(73) Titulaire : **COMMISSARIAT A L'ENERGIE ATOMIQUE**
**31/33, rue de la Fédération**
**F-75015 Paris Cédex 15 (FR)**

(72) Inventeur : **Musikas, Claude**
**5, Avenue Moissan**
**F-91440 Bures sur Yvette (FR)**
Inventeur : **Zorz, Philippe**
**1, rue du Docteur L. Arene**
**F-30200 Bagnols sur Ceze (FR)**

(74) Mandataire : **Mongrédien, André et al**
**c/o BREVATOME**
**25, rue de Ponthieu**
**F-75008 Paris (FR)**

EP 0 381 579 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé d'extraction des ions U(VI) et/ou des ions Pu(IV) présents dans une solution aqueuse acide au moyen de mélanges de N,N-dialkylamides.

Elle s'applique en particulier à l'extraction de l'uranium (VI) et éventuellement du plutonium (IV) présents dans les solutions nitriques de dissolution, obtenues au premier stade du retraitement des combustibles nucléaires irradiés, ainsi qu'à la séparation de l'uranium et du plutonium sans modification du degré d'oxydation du plutonium.

L'une des pratiques habituelles pour retraiter les combustibles nucléaires irradiés est de dissoudre tout d'abord le matériau combustible dans une solution nitrique, de traiter ensuite cette solution par extraction au moyen d'un solvant organique pour séparer l'uranium et le plutonium des produits de fission et de séparer ensuite l'uranium du plutonium.

Pour la première opération d'extraction, on utilise généralement un solvant organique constitué par du phosphate de tributyle, et l'on sépare ensuite l'uranium du plutonium extraits dans le solvant organique par mise en contact de celui-ci avec une solution aqueuse nitrique contenant des agents réducteurs pour réduire le plutonium (IV) en plutonium (III) et le faire passer dans la solution aqueuse.

Ce procédé qui est largement utilisé à l'échelle industrielle présente toutefois certains inconvénients qui sont liés notamment à l'utilisation de phosphate de tributyle en tant qu'extractant.

Aussi, des recherches ont été entreprises pour trouver d'autres solvants organiques capables d'extraire ou de séparer l'uranium et le plutonium. A la suite de ces recherches, on a étudié la possibilité d'utiliser des amides et on connaît par le brevet français FR-A- 2 591 213 un procédé d'extraction simultanée de l'uranium (VI) et du plutonium (IV) ou de séparation de l'uranium (VI) du plutonium (IV) utilisant comme extractant des N, N-dialkylamides de formule :

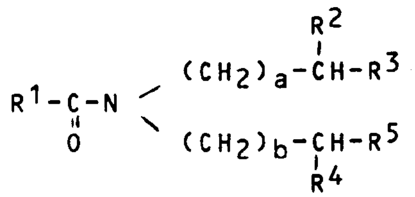

(I)

dans laquelle $R^1$, $R^2$, $R^3$, $R^4$ et $R^5$ sont des radicaux alkyle linéaires ou ramifiés et a et b sont des nombres entiers allant de 1 à 4.

Dans ce brevet, on a montré que les N, N-dialkylamides répondant à la formule précitée avec $R^1$ étant un radical linéaire conviennent mieux pour l'extraction simultanée de l'uranium et du plutonium, alors que les N, N-dialkylamides dans lesquels $R^1$ est un radical alkyle ramifié, conviennent mieux pour la séparation de l'uranium et du plutonium.

Les résultats obtenus dans les deux cas sont satisfaisants. Néanmoins, il serait intéressant de pouvoir les améliorer, notamment pour diminuer le nombre de cycles de purification du plutonium et de l'uranium dans une installation de retraitement de combustibles nucléaires irradiés.

La présente invention a précisément pour objet un procédé d'extraction de l'uranium (VI) et/ou du plutonium (IV) présents dans une solution aqueuse au moyen d'un mélange de N, N-dialkylamides, qui permet d'obtenir cette amélioration.

Selon l'invention, le procédé de séparation de l'uranium (VI) et/ou du plutonium (IV) à partir d'une solution aqueuse, se caractérise en ce que :

1°) on met en contact la solution aqueuse avec un solvant organique comprenant :

- un premier N,N-dialkylamide de formule :

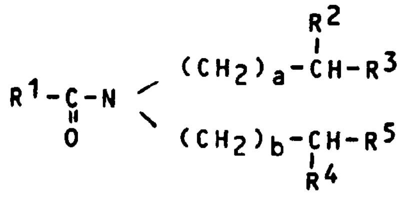

(I)

dans laquelle $R^1$ est un radical alkyle linéaire de 1 à 12 atomes de carbone ou un radical H, $R^2$ et $R^4$

qui sont identiques ou différents, sont des radicaux alkyle linéaires ou ramifiés de 2 à 4 atomes de carbone, $R^3$ et $R^5$ qui sont identiques ou différents, sont des radicaux alkyle linéaires ou ramifiés de 1 à 6 atomes de carbone, et a et b qui sont identiques ou différents, sont des nombres entiers allant de 1 à 6, et

- un deuxième N,N-dialkylamide de formule :

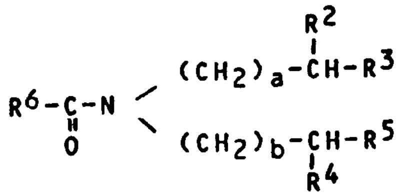

(II)

dans laquelle $R^2$, $R^3$, $R^4$, $R^5$, a et b ont la signification donnée ci-dessus et $R^6$ est un radical alkyle ramifié de 3 à 12 atomes de carbone, et

2°) on sépare le solvant organique contenant l'uranium (VI) et/ou le plutonium (IV) de la solution aqueuse.

Le procédé de l'invention tire avantageusement profit du fait qu'en utilisant un mélange de deux N, N-dialkylamides divulgués par le brevet français FR-A- 2 591 213, mais en choisissant un premier N, N-dialkylamide avec un radical alkyle ramifié, et un deuxième N, N-dialkylamide avec un radical alkyle linéaire, on obtient de meilleurs résultats, pour la séparation de l'uranium (VI) du plutonium (IV). La coextraction Pu(IV), U(VI) par les mélanges est améliorée si on la compare à l'extraction attendue par l'addition des pouvoirs extractants des extractants purs. Ceci est probablement dû à un effet de synergie entre les deux N,N-dialkylamides.

Généralement, la solution aqueuse contenant l'uranium (VI) et/ou le plutonium (IV) est une solution nitrique et dans le cas où cette solution contient simultanément de l'uranium (VI) et du plutonium (IV), on peut mettre en oeuvre le procédé, soit pour extraire simultanément l'uranium (VI) et le plutonium (IV), soit pour séparer l'uranium (VI) du plutonium (IV).

Aussi, selon un premier mode de réalisation du procédé de l'invention, on ajuste la concentration en acide nitrique de la solution aqueuse comprenant l'uranium (VI) et le plutonium (IV) à une valeur de 2 à 8mol/l pour extraire simultanément l'uranium (VI) et le plutonium (IV) dans le solvant organique.

Selon un second mode de réalisation du procédé de l'invention, on ajuste la concentration en acide nitrique de la solution aqueuse comprenant l'uranium (VI) et le plutonium (IV) à une valeur de 0,1 à 2 mol/l pour extraire sélectivement l'uranium (VI) dans le solvant organique et le séparer du plutonium (IV).

Cette possibilité d'utiliser le même mélange de N, N-dialkylamides pour extraire simultanément ou pour séparer l'uranium (VI) du plutonium (IV), en jouant sur l'acidité de la solution aqueuse, peut être utilisée en particulier pour le retraitement de combustibles nucléaires irradiés ; dans ce cas, on peut réaliser le premier cycle de séparation de l'uranium et du plutonium des produits de fission au moyen de ce solvant, puis effectuer la partition uranium-plutonium à partir du solvant chargé en U et Pu.

Aussi, l'invention a également pour objet un procédé de traitement d'une solution aqueuse nitrique contenant de l'uranium (VI), du plutonium (IV) et des produits de fission, qui comprend les étapes successives suivantes :

1°) extraction simultanée de l'uranium (VI) et du plutonium (IV) dans un solvant organique comprenant un premier N, N-dialkylamide de formule (I) et un second N, N-dialkylamide de formule (II), et

2°) séparation du plutonium présent dans le solvant organique obtenu à la fin de la première étape par mise en contact de ce solvant avec une solution aqueuse nitrique ayant une concentration en acide nitrique de 0,1 à 2 mol/l pour réextraire le plutonium dans la solution aqueuse nitrique.

La possibilité de réaliser cette partition uranium-plutonium sans avoir à réduire le plutonium est très intéressante car elle évite les nombreux problèmes dûs à l'introduction d'agents réducteurs tels que l'hydrazine et l'hydroxylamine.

Ce procédé peut aussi comprendre une troisième étape de réextraction de l'uranium par mise en contact du solvant organique obtenu à la fin de la deuxième étape avec une solution aqueuse nitrique ayant une concentration en acide nitrique de 0 à 0,2 mol/l.

Dans les N, N-dialkylamides de formule (I) et (II) utilisés dans l'invention, $R^2$ et $R^4$ sont de préférence le radical éthyle et a et b sont de préférence identiques et égaux à 1.

A titre d'exemple, le premier N, N-dialkylamide répond à la formule :

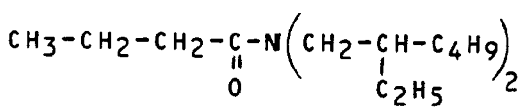
(III)

et le second N, N-dialkylamide répond à la formule :

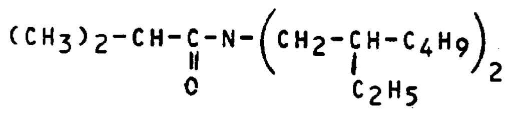
(IV)

Pour obtenir de bons résultats avec le même solvant pour l'extraction simultanée de l'uranium (VI) et du plutonium (IV), et la séparation de l'uranium (VI) du plutonium (IV), le rapport molaire du premier N, N-dialkylamide sur le second N, N-dialkylamide est de 0,1 à 10.

Généralement, la concentration totale en N, N-dialkylamides du solvant organique est dans la gamme de 0,2 à 1,7 mol/l.

Les N, N-dialkylamides utilisés dans l'invention peuvent être préparés par des procédés classiques, par exemple par réaction du chlorure d'acide de formule :

$R^1COCl$ ou $R^6COCl$

avec l'amine secondaire de formule :

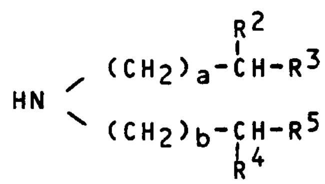

dans lesquelles $R^1$, $R^2$, $R^3$, $R^4$, $R^5$, $R^6$, a et b ont la signification donnée ci-dessus, comme il est décrit dans le brevet FR-A- 2 591 213.

Les solvants organiques utilisés dans l'invention comprennent généralement un diluant organique inerte. A titre d'exemple de tels diluants, on peut citer les carbures aromatiques comme le benzène, le xylène, le mésitylène, le tertiobutylbenzène, les alcools comme le décanol et les hydrocarbures aliphatiques, en particulier les hydrocarbures saturés linéaires ou ramifiés.

De préférence, dans l'invention on utilise comme diluant un hydrocarbure aliphatique, en particulier un hydrocarbure saturé linéaire ou ramifié tel que le dodécane ou le tétrapropylène hydrogéné (TPH).

Pour mettre en oeuvre le procédé de l'invention, on peut utiliser tout appareillage classique permettant de réaliser dans de bonnes conditions la mise en contact de la solution aqueuse avec le solvant organique et sa séparation.

A titre d'exemple de tels appareillages, on peut citer les colonnes d'extraction, les batteries de mélangeurs-décanteurs, les colonnes pulsées, les extracteurs centrifuges, etc. ...

Généralement, on opère à la pression et à la température ambiantes avec des rapports en volume phase aqueuse / phase organique qui peuvent varier de 10 à 0,1.

D'autres caractéristiques et avantages de l'invention apparaitront mieux à la lecture de la description qui suit donnée bien entendu à titre illustratif et non limitatif, en référence au dessin annexé sur lequel :

- la figure 1 est un diagramme représentant les coefficients de distribution des ions U(VI) et Pu(IV) entre des phases aqueuses 1N en $HNO_3$ et des phases organiques contenant du DO$_i$BA auquel on ajoute jusqu'à 0,6mol de DOBA en fonction de la concentration en DOBA.
- La figure 2 est un diagramme représentant les variations du coefficient de distribution de U(VI) entre une phase aqueuse nitrique et un solvant organique constitué par un mélange de DOBA et DO$_i$BA en fonction du pourcentage de DOBA.
- La figure 3 est un graphique représentant les variations du coefficient de distribution de Pu(IV) entre une phase aqueuse nitrique et un solvant organique comprenant un mélange de DOBA et DO$_i$BA en fonction de la teneur en DOBA du mélange.
- La figure 4 est un graphique représentant le spectre ultraviolet visible des complexes de l'uranium (VI) dans un mélange de DOBA et DO$_i$BA.
- La figure 5 est une représentation schématique d'une installation comportant une batterie d'extraction

de l'uranium et du plutonium, une batterie de séparation uranium/plutonium et une batterie de réextraction de l'uranium.

- Les figures 6 à 8 sont des diagrammes représentant les variations des coefficients de distribution de produits de fission tels que Tc, Zr et Ru entre une solution nitrique et le solvant organique de l'invention en fonction de la concentration en acide nitrique.

Dans les exemples qui suivent on utilise comme solvant organique un mélange de DO$_i$BA, soit du N, N-dialkylamide de formule (III)

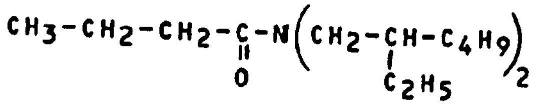

(III)

et de DO$_i$BA, soit du N, N-dialkylamide de formule (IV)

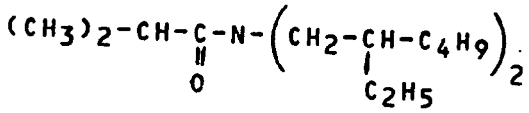

(IV)

dilué dans du tétrapropylène hydrogéné (TPH).

**Exemple 1.**

Dans cet exemple, on utilise un solvant organique constitué par du TPH comprenant 1mol/l de DO$_i$BA et 0,5 mol/l de DOBA pour traiter une solution aqueuse d'acide nitrique 1N contenant 1g/l d'uranium (VI) et 100mg/l de plutonium (IV).

On met en contact un volume de la solution aqueuse avec un volume du solvant organique. Après 5min d'agitation, on sépare les deux phases par décantation et on mesure leurs teneurs respectives en uranium (VI) et en plutonium (IV) par colorimétrie. On en déduit les coefficients de distribution en uranium (VI) et en plutonium (IV) qui correspondent au rapport de la concentration de l'élément (U(VI) ou Pu(IV)) dans la phase organique sur la concentration de ce même élément dans la phase aqueuse.

On effectue une série d'expériences de la même façon mais en faisant varier la concentration en DOBA du mélange de 0 à 0,6 mol/l, la concentration en DO$_i$BA étant toujours de 1mol/l.

Les résultats obtenus sont donnés sur la figure 1 qui représente les variations des coefficients de distribution de U (VI) et de Pu (IV) en fonction de la concentration en DOBA (en mol/l).

Sur cette figure, les courbes en traits pleins se rapportent à l'uranium (VI) et les courbes en tirets se rapportent au plutonium (IV). Par ailleurs, les courbes 1 et 2 correspondent aux résultats obtenus dans cette série d'expériences, alors que les courbes 3 et 4 correspondent aux résultats obtenus par calcul à partir des coefficients de distribution de U(VI) et Pu(IV) dans DOBA seul ou DO$_i$BA seul, en supposant que l'affinité du mélange pour les ions métalliques est la somme des affinités des extractants pris séparément.

Au vu de cette figure, on remarque que les résultats obtenus avec le mélange sont très supérieurs aux résultats calculés ; ceci montre qu'il existe un effet de synergie entre les deux extractants.

**Exemple 2.**

Cet exemple concerne l'extraction d'uranium (VI) par un solvant comprenant du DOBA et du DO$_i$BA, à une concentration totale en amides (DOBA+DO$_i$BA) de 1,025mol/l dans du TPH mais avec des proportions différentes de DOBA / DO$_i$BA.

Dans cet exemple la solution aqueuse est une solution d'acide nitrique 1N contenant $5.10^{-2}$mol/l d'uranium (VI).

On opère dans les mêmes conditions que celles de l'exemple 1 et on détermine également en fin d'opération les coefficients de distribution de l'uranium (VI).

Les résultats obtenus sont donnés sur la figure 2 qui est un diagramme représentant les variations du coefficient de distribution de l'uranium (VI)en fonction du pourcentage molaire de DOBA dans le mélange de DOBA et DO$_i$BA.

Sur cette figure, la courbe 5 se rapporte aux résultats obtenus dans cette expérience et les courbes 6 et 7 correspondent à des courbes obtenues par calcul suivant les deux hypothèses suivantes.

Pour la courbe 7, on a supposé que les coefficients de distribution $D_M$ des mélanges sont la somme des coefficients de distribution des extractants pris séparément, soit $D_M$mélange=$D_M$DOBA+$D_M$DO$_i$BA.

Pour la courbe 6, on a supposé que les coefficients de distribution du mélange sont la somme des coefficients de distribution des extractants pris séparément, mais en tenant compte que le milieu d'extraction du mélange est équivalent à un milieu dont la concentration en amide est celle du mélange. Dans ce cas, les coefficients de distribution des extractants pris séparément se calculent comme l'indiquent les équations (2) et (3) suivantes :

$$\log D_M^{'DOBA} = \log D_M^{DOBA(mélange)} + 2 \log C_{DOBA} - 2 \log C_{mélange} \quad (2)$$

$$\log D_M^{'DO_iBA} = \log D_M^{DO_iBA(mélange)} + 2 \log C_{DO_iBA} - 2 \log C_{mélange} \quad (3)$$

Le coefficient de distribution du mélange est donné par l'équation (4)

$$D_M^{mélange} = D_M^{'DOBA} + D_M^{'DO_iBA} \quad (4)$$

Au vu de la figure 2, on constate que les coefficients de distribution trouvés dans cette expérience sont toujours supérieurs à ceux que l'on évalue par calcul selon les deux hypothèses précédentes.

**Exemple 3.**

Cet exemple illustre l'utilisation d'un mélange de DOBA et de DO$_i$BA à une concentration totale de 1mol/l dans du TPH pour extraire du plutonium (IV) présent dans une solution aqueuse nitrique 1N contenant 0,1g/l de Pu(IV), en faisant varier les proportions molaires de DOBA dans le mélange.

On opère dans les mêmes conditions que celles de l'exemple 2 et on détermine en fin d'opération les concentrations en plutonium (IV) de la solution aqueuse et du solvant organique.

Les résultats obtenus sont donnés sur la figure 3 qui représente les variations du coefficient de distribution du plutonium (IV) en fonction du pourcentage molaire de DOBA dans le mélange de DOBA et DO$_i$BA.

Sur cette figure, la courbe 8 se réfère aux résultats obtenus dans cette expérience alors que la courbe 9 correspond aux estimations faites dans la même hypothèse que la courbe 6 et la courbe aux estimations faites dans la même hypothèse que la courbe 7 de la figure 2.

Au vu de cette figure, on constate que le coefficient de distribution du plutonium (IV) est légèrement supérieur aux valeurs calculées mais l'amélioration est nettement plus faible que dans le cas de l'uranium (VI).

On suppose que dans le cas de l'uranium (VI), il existe un complexe nouveau probablement de formule $UO_2(NO_3)_2$ DOBA, DO$_i$BA dont la stabilité est supérieure à celle des complexes $UO_2(NO_3)_2(DOBA)_2$ et $UO_2(NO_3)_2(DO_iBA)_2$. Cette hypothèse a été confirmée par spectrométrie ultraviolette d'un solvant organique contenant 0,5mol/l de DOBA, 0,5mol/l de DO$_i$BA et de l'uranium (VI). Le spectre obtenu est représenté sur la figure 4.

Sur cette figure, on remarque qu'il existe un premier spectre en traits pleins correspondant au complexe $UO_2(NO_3)_2(DO_iBA)(DOBA)$, un deuxième spectre en pointillés correspondant au complexe $UO_2(NO_3)_2(DOBA)_2$ et un troisième spectre en tirets correspondant au complexe $UO_2(NO_3)_2(DO_iBA)_2$.

Dans cette solution, les proportions des complexes $UO_2(NO_3)_2(DOBA)_2$, $UO_2(NO_3)_2(DO_iBA)_2$ et $UO_2(NO_3)_2(DOBA)(DO_iBA)$ sont respectivement de 43,7%, 10,8% et 45,5%.

En revanche dans le cas du plutonium IV, le spectre d'un solvant comprenant un mélange de DOBA et DO$_i$BA est identique à celui d'un solvant comprenant seulement du DOBA, ce qui montre qu'à acidité modérée, le complexe présent est $Pu(NO_3)_4(DOBA)_2$, le DO$_i$BA ne joue que le rôle de modificateur du milieu organique. Dans ce cas, il y a un effet de milieu correspondant au fait que l'augmentation de la concentration en DOBA induit des augmentations de coefficient de distribution supérieures à celles attendues par la stoechiométrie des complexes.

**Exemples 4 à 13.**

Dans ces exemples, on suit le même mode opératoire que dans l'exemple 1 pour extraire l'uranium (VI) et éventuellement le plutonium (IV) de solutions aqueuses nitriques contenant de l'uranium (VI) et du plutonium (IV) en utilisant un solvant organique constitué par un mélange de $DO_iBA$ et de DOBA dilué dans du TPH avec des teneurs différentes en $DO_iBA$ et DOBA.

Les résultats et les conditions utilisées dans ces exemples sont donnés dans le tableau 1.

**Exemple 14.**

Cet exemple illustre l'utilisation du procédé de l'invention pour traiter une solution nitrique contenant de l'uranium, du plutonium et des produits de fission provenant du stade de dissolution de combustibles irradiés dans un réacteur à eau légère à 33000 $MWJ.t^{-1}$.

Pour ce traitement, on utilise l'installation représentée schématiquement sur la figure 5 qui comprend une première batterie (50) de 16 mélangeurs-décanteurs servant à l'extraction simultanée de l'uranium et du plutonium, une deuxième batterie (52) de 16 mélangeurs-décanteurs servant à la partition uranium-plutonium et une troisième batterie (54) de 16 mélangeurs-décanteurs servant à la réextraction de l'uranium dans une solution nitrique.

Dans cette installation, on utilise comme solvant un mélange de $DO_iBA$ à 1mol/l et de DOBA à 0,5mol/l dans du TPH, qui est introduit dans le premier étage de la batterie (50) d'extraction.

La solution aqueuse provenant de la dissolution du combustible irradié est une solution nitrique 4N qui comprend 250g/l d'uranium (VI), 2,55g/l de Pu(IV), et elle est introduite dans le 10è étage de cette batterie (50) alors que de l'acide nitrique 1N est introduit dans le 16è étage pour servir au lavage des produits de fission du solvant organique sortant du 10è étage.

Sur ce schéma on a figuré en trait plein la circulation des solutions aqueuses et en tirets la circulation du solvant organique.

Les débits retenus dans la première batterie (50) d'extraction sont les suivants.

- un débit de $0{,}2l.h^{-1}$ pour l'acide nitrique 1N introduit dans le 16è étage.
- un débit de $1{,}0\ l.h^{-1}$ pour la solution aqueuse introduite dans le 10è étage, et
- un débit de $2{,}25l.h^{-1}$ pour le solvant organique introduit dans le premier étage.

Ainsi, l'extraction est réalisée avec un rapport en volume solvant organique/solution aqueuse de 1,87 et le lavage est réalisé avec un rapport solvant organique / solution aqueuse de 11,25.

A la sortie de la batterie d'extraction (50), on recueille un solvant organique contenant 111,1g/l d'uranium (VI) et 1,13g/l de plutonium (IV) que l'on introduit dans le 9è étage de la batterie (52) de partition uranium-plutonium. Dans cette batterie, on introduit dans le 16è étage une solution nitrique 0,5M et dans le premier étage du solvant organique pur pour le lavage de l'uranium.

Les débits sont les suivants.

- $0{,}55l.h^{-1}$ pour la solution nitrique 0,5M du 16è étage,
- $2{,}25l.h^{-1}$ pour le solvant organique introduit dans l'étage n° 9, et
- $0{,}55l.h^{-1}$ pour le solvant organique pur introduit dans le premier étage.

Ainsi, la partition est réalisée avec un rapport solvant organique/solution aqueuse de 5,1 et le lavage est réalisé avec un rapport solvant organique/solution aqueuse de 1.

A la sortie de la batterie (52) de partition uranium-plutonium, on récupère dans l'étage n° 16 du solvant organique contenant 89,28g/l d'uranium (VI) et 1,6mg/l de plutonium (IV), et dans le premier étage une solution aqueuse d'acide nitrique 1,37N contenant 4,6g/l de plutonium (IV) et 8,9mg/l d'uranium (VI).

Ainsi, on obtient une concentration maximale en plutonium (IV) à la sortie du premier étage tout en évitant une accumulation supérieure à 10g/l en plutonium dans les étages intermédiaires. Les concentrations en uranium, en plutonium et en $HNO_3$ des solutions aqueuses et organiques circulant dans chacun des étages des batteries (50) et (52) ainsi que les débits sont donnés respectivement dans les tableaux 2 et 3.

Au vu du tableau 2, on constate que la fuite en plutonium est bien inférieure à 0,1mg/l après 6 étages d'extraction.

On obtient ainsi

- du plutonium IV à 4,6g/l en milieu $HNO_3$ 1,4M contenant moins de 10mg/l d'uranium - ($FD=4{,}6.10^4$)
- de l'uranium VI ($89gl^{-1}$) contenant moins de 2mgl de plutonium ($FD=4{,}4.10^2$).

A la sortie de la batterie (52) de partition uranium-plutonium, le solvant organique est introduit dans le premier étage de la batterie (54) de réextraction de l'uranium alors qu'une solution nitrique 0,02N est introduite dans le 16è étage à un débit de 1,12l/h.

Les données des tableaux 2 et 3 montrent ainsi que l'on peut utiliser le mélange DOBA et $DO_iBA$ pour

réaliser successivement l'extraction simultanée de l'uranium et du plutonium et la séparation uranium-plutonium.

Dans la batterie d'extraction (50), on obtient un bon taux de décontamination en produits de fission tels que le technétium, le zirconium (IV) et le ruthénium, comme le montrent les figures 6, 7 et 8.

Sur ces figures 6, 7 et 8, on a représenté respectivement les variations des coefficients de distribution de Tc, de Zr(IV) et de Ru en fonction de la concentration en acide nitrique d'une solution aqueuse contenant du Tc, du Zr IV ou du Ru. Ces coefficients de distribution ont été obtenus en mettant en contact un volume d'une solution aqueuse nitrique contenant $10^{-10}$mol/l de Tc sous forme $TcO_4^-$, $10^{-3}$mol.l$^{-1}$ de Zr(IV) ou $10^{-3}$mol.l$^{-1}$ de Ru, avec 1 volume d'un mélange de $DO_iBA$ 1N et DOBA 0,5M dans du TPH. Après 5 min d'agitation, on sépare les deux phases et on mesure leurs teneurs respectives en technétium, zirconium ou ruthénium.

Au vu de la figure 6, on constate que le coefficient de distribution du technétium est faible. Il est d'ailleurs plus faible que celui obtenu avec le tributylphosphate à la même concentration.

Sur la figure 7, on voit que le coefficient de distribution du zirconium (IV) (courbe 11) est plus faible que celui obtenu dans les mêmes conditions (courbe 12) avec du TBP $(_{1M})$ dans du TPH.

Sur la figure 8, on voit que le coefficient de distribution du ruthénium (courbe 13) est plus faible que celui obtenu (courbe 14) avec un autre N, N-dialkylamide (DOHA) de formule

$$C_5H_{11}-\underset{\underset{O}{\|}}{C}-N-(CH_2-\underset{\underset{C_2H_5}{|}}{CH}-C_4H_9)_2$$

Il est également plus faible que celui obtenu avec du TBP $_{1M}$ dans du TPH où $D_{Ru}$ est légèrement supérieur à $10^{-2}$ pour une concentration en acide nitrique de 3mol/l.

On a vérifié de même que les ions $Sr^{2+}$, les lanthanides (III) et l'américium (III) sont peu extraits par les mélanges de l'invention. De même les ions $Fe^{3+}$ ne sont pratiquement pas transférés en phase organique quelle que soit l'acidité du milieu aqueux.

Ainsi, l'utilisation du mélange de N, N-dialkylamides de l'invention permet d'obtenir des facteurs de séparation en produits de fission plus importants qu'avec le phosphate de tributyle. On peut ainsi diminuer le nombre de cycles de purification du plutonium et de l'uranium.

L'utilisation du mélange de N,N-dialkylamides de l'invention apporte ainsi les avantages suivants :

- Une régénération du solvant ne nécessitant pas de sels inorganiques. En effet, les substituants du groupe carbonyle des amides sont suffisamment courts pour envisager des régénérations de solvant dégradé par lavage acide, le produit principal de l'hydrolyse et de la radiolyse d'un N,N-dialkylamide, $R_2NCOR'$, étant l'acide carboxylique R'COOH.
- Une partition U(VI)-Pu(IV), permettant d'éviter les complications résultant de l'usage des réducteurs.
- La diminution du nombre de cycles de purification grâce à des coefficients de séparation actinides-PF (Zr, Ru) plus importants.

## Tableau 1

| Ex. | Concentrations en | | | | $D_{U(VI)}$ | $D_{Pu(IV)}$ | $\frac{D_{U(VI)}}{D_{Pu(IV)}}$ |
|---|---|---|---|---|---|---|---|
| | $HNO_3$ (aq.) mol $l^{-1}$ | U(VI) (org.) $g.l^{-1}$ | $DO_iBA$ mol $l^{-1}$ | DOBA mol $l^{-1}$ | | | |
| 4 | 4 | 100 | 1,2 | 0,3 | 2,08 | 0,215 | 9,69 |
| 5 | 4 | 97,4 | 1 | 0,4 | 2,24 | 0,26 | 8,6 |
| 6 | 4 | 98,3 | 1 | 0,45 | 2,38 | 0,32 | 7,4 |
| 7 | 4 | 98,8 | 1 | 0,5 | 2,89 | 0,495 | 5,8 |
| 8 | 4 | 98,3 | 1 | 0,55 | 3,23 | 0,59 | 5,5 |
| 9 | 0,5 | 79,1 | 1 | 0,4 | 0,69 | 0,044 | 15,4 |
| 10 | 0,5 | 79,9 | 1 | 0,45 | 0,70 | 0,052 | 14,2 |
| 11 | 0,5 | 79,7 | 1 | 0,5 | 0,78 | 0,056 | 12,9 |
| 12 | 0,55 | 78,9 | 1 | 0,55 | 0,81 | 0,073 | 11,6 |
| 13 | 0,9 | 78,3 | 1 | 1,02 | 0,086 | | 11,8 |

**Tableau 2**

| Etage | Concentrations dans les étages de la batterie (50) | | | | | | | |
|---|---|---|---|---|---|---|---|---|
| | U(VI) (aq.) | U(VI) (org.) | Pu(IV) (aq.) | Pu(IV (org.) | $HNO_3$ (aq.) | $HNO_3$ (org.) | débit (aq.) | débit (org.) |
| 1 | $1,24.10^{-11}$ | $1,36.10^{-10}$ | $5,58.10^{-9}$ | $1,17.10^{-8}$ | 3,00 | 0,79 | 1,20 | 2,25 |
| 2 | $2,68.10^{-10}$ | $3,52.10^{-9}$ | $2,76.10^{-8}$ | $1,01.10^{-7}$ | 4,50 | 1,13 | 1,20 | 2,25 |
| 3 | $6,62.10^{-9}$ | $8,93.10^{-8}$ | $1,95.10^{-7}$ | $9,22.10^{-7}$ | 5,14 | 1,30 | 1,20 | 2,25 |
| 4 | $1,67.10^{-7}$ | $2,28.10^{-6}$ | $1,73.10^{-6}$ | $9,03.10^{-6}$ | 5,44 | 1,37 | 1,20 | 2,25 |
| 5 | $4,28.10^{-6}$ | $5,88.10^{-5}$ | $1,69.10^{-5}$ | $9,21.10^{-5}$ | 5,59 | 1,41 | 1,20 | 2,25 |
| 6 | $1,10.10^{-4}$ | $1,52.10^{-3}$ | $1,72.10^{-4}$ | $9,58.10^{-4}$ | 5,66 | 1,43 | 1,20 | 2,25 |
| 7 | $2,85.10^{-3}$ | $3,93.10^{-2}$ | $1,79.10^{-3}$ | $1,00.10^{-2}$ | 5,69 | 1,44 | 1,20 | 2,25 |
| 8 | $7,36.10^{-2}$ | 1,013 | $1,88.10^{-2}$ | 0,10 | 5,70 | 1,43 | 1,20 | 2,25 |
| 9 | 1,900 | 23,95 | 0,19 | 0,98 | 5,70 | 1,32 | 1,20 | 2,25 |
| 10 | 44,90 | 115,1 | 1,83 | 1,30 | 5,49 | 0,65 | 1,20 | 2,25 |
| 11 | 45,46 | 115,2 | 1,94 | 1,32 | 5,39 | 0,63 | 0,20 | 2,25 |
| 12 | 46,49 | 115,5 | 2,18 | 1,38 | 5,21 | 0,60 | 0,20 | 2,25 |
| 13 | 48,88 | 115,8 | 2,86 | 1,55 | 4,87 | 0,55 | 0,20 | 2,25 |
| 14 | 53,25 | 116,7 | 4,70 | 1,79 | 4,23 | 0,44 | 0,20 | 2,25 |
| 15 | 62,53 | 117,3 | 7,44 | 1,72 | 3,08 | 0,36 | 0,20 | 2,25 |
| 16 | 70,03 | 111,1 | 6,66 | 1,13 | 2,16 | 0,26 | 0,20 | 2,25 |

## Tableau 3

| Etage | Concentrations dans les étages de la batterie (52) | | | | | | | |
|---|---|---|---|---|---|---|---|---|
| | U(VI) (aq.) | U(VI) (org.) | Pu(IV) (aq.) | Pu(IV (org.) | $HNO_3$ (aq.) | $HNO_3$ (org.) | débit (aq.) | débit (org.) |
| 1 | $8,96.10^{-3}$ | $2,51.10^{-2}$ | 4,62 | 1,56 | 1,37 | 0,31 | 0,55 | 0,55 |
| 2 | $3,40.10^{-2}$ | 0,13 | 6,19 | 3,13 | 1,69 | 0,41 | 0,55 | 0,55 |
| 3 | 0,14 | 0,62 | 7,76 | 4,31 | 1,79 | 0,44 | 0,55 | 0,55 |
| 4 | 0,63 | 2,75 | 8,93 | 4,96 | 1,82 | 0,45 | 0,55 | 0,55 |
| 5 | 2,76 | 10,84 | 9,59 | 4,67 | 1,82 | 0,42 | 0,55 | 0,55 |
| 6 | 10,85 | 31,46 | 9,30 | 3,01 | 1,79 | 0,34 | 0,55 | 0,55 |
| 7 | 31,46 | 62,11 | 7,64 | 1,58 | 1,72 | 0,26 | 0,55 | 0,55 |
| 8 | 62,12 | 90,70 | 6,21 | 0,92 | 1,63 | 0,21 | 0,55 | 0,55 |
| 9 | 90,71 | 110,0 | 5,55 | 0,69 | 1,59 | 0,18 | 0,55 | 2,80 |
| 10 | 105,5 | 111,5 | 3,54 | 0,39 | 1,26 | 0,15 | 0,55 | 2,80 |
| 11 | 113,3 | 113,1 | 1,99 | 0,21 | 1,07 | 0,13 | 0,55 | 2,80 |
| 12 | 121,1 | 114,7 | 1,06 | 0,10 | 0,97 | 0,11 | 0,55 | 2,80 |
| 13 | 129,4 | 116,6 | 0,53 | $4,99.10^{-2}$ | 0,88 | $9,42.10^{-2}$ | 0,55 | 2,80 |
| 14 | 139,1 | 116,5 | 0,24 | $2,03.10^{-2}$ | 0,78 | $7,21.10^{-2}$ | 0,55 | 2,80 |
| 15 | 138,6 | 111,4 | $9,50.10^{-2}$ | $6,84.10^{-3}$ | 0,67 | $5,24.10^{-2}$ | 0,55 | 2,80 |
| 16 | 112,7 | 89,28 | $2,64.10^{-2}$ | $1,65.10^{-3}$ | 0,57 | $3,86.10^{-2}$ | 0,55 | 2,80 |

## Revendications

1. Procédé de séparation de l'uranium (VI) et/ou du plutonium (IV) à partir d'une solution aqueuse, caractérisé en ce que
   1°) l'on met en contact la solution aqueuse avec un solvant organique comprenant :
   - un premier N,N-dialkylamide de formule :

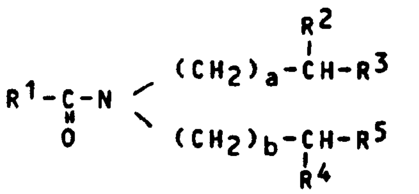

(I)

   dans laquelle $R^1$ est un radical alkyle linéaire de 1 à 12 atomes de carbone ou un radical H, $R^2$ et $R^4$ qui sont identiques ou différents, sont des radicaux alkyle linéaires ou ramifiés de 2 à 4 atomes de carbone, $R^3$ et $R^5$ qui sont identiques ou différents, sont des radicaux alkyle linéaires ou ramifiés de 1 à 6 atomes de carbone, et a et b qui sont identiques ou différents, sont des nombres entiers allant de 1 à 6, et
   - un deuxième N,N-dialkylamide de formule :

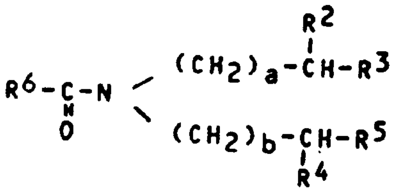

(II)

   dans laquelle $R^2$, $R^3$, $R^4$, $R^5$, a et b ont la signification donnée ci-dessus et $R^6$ est un radical alkyle ramifié de 3 à 12 atomes de carbone, et
   2°) en ce que l'on sépare le solvant organique contenant l'uranium (VI) et/ou le plutonium (IV) de la solution aqueuse.

2. Procédé selon la revendication 1, caractérisé en ce que la solution aqueuse est une solution nitrique.

3. Procédé selon la revendication 2, caractérisé en ce que la solution aqueuse comprend de l'uranium (VI) et du plutonium (IV), et en ce que l'on ajuste la concentration en acide nitrique de la solution aqueuse à une valeur de 2 à 8 mol/l pour extraire simultanément l'uranium (VI) et le plutonium (IV)dans le solvant organique.

4. Procédé selon la revendication 2, caractérisé en ce que la solution aqueuse contient de l'uranium (VI) et du plutonium (IV) et en ce que l'on ajuste la concentration en acide nitrique de cette solution à une valeur de 0,1 à 2 mol/l pour extraire sélectivement l'uranium (VI) dans le solvant organique et le séparer du plutonium (IV).

5. Procédé de traitement d'une solution aqueuse nitrique contenant de l'uranium (VI), du plutonium (IV) et des produits de fission, caractérisé en ce qu'il comprend les étapes successives suivantes :
   1°) extraction simultanée de l'uranium (VI) et du plutonium (IV) dans un solvant organique comprenant :
   - un premier N, N-dialkylamide de formule :

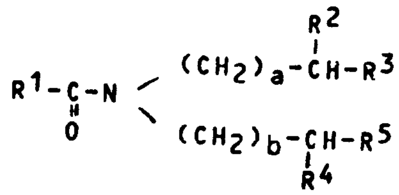 (I)

dans laquelle $R^1$ est un radical alkyle linéaire de 1 à 12 atomes de carbone ou un radical H, $R^2$ et $R^4$ qui sont identiques ou différents, sont des radicaux alkyle linéaires ou ramifiés de 2 à 4 atomes de carbone, $R^3$ et $R^5$ qui sont identiques ou différents, sont des radicaux alkyle linéaires ou ramifiés de 1 à 6 atomes de carbone, et a et b qui sont identiques ou différents, sont des nombres entiers allant de 1 à 6, et

- un deuxième N,N-dialkylamide de formule :

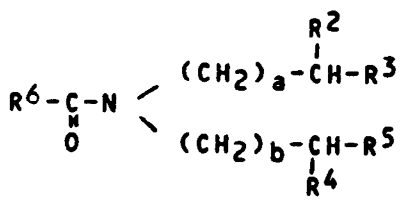 (II)

dans laquelle $R^2$, $R^3$, $R^4$, $R^5$, a et b ont la signification donnée ci-dessus et $R^6$ est un radical alkyle ramifié de 3 à 12 atomes de carbone, et

2°) séparation du plutonium présent dans le solvant organique obtenu à la fin de la première étape par mise en contact de ce solvant avec une solution aqueuse nitrique ayant une concentration en acide nitrique de 0,1 à 2mol/l pour réextraire le plutonium dans la solution aqueuse nitrique.

6. Procédé selon la revendication 5, caractérisé en ce qu'il comprend une troisième étape de réextraction de l'uranium dans une solution aqueuse par mise en contact du solvant organique obtenu à la fin de la deuxième étape avec une solution aqueuse nitrique ayant une concentration en acide nitrique de 0 à 0,2mol/l.

7. Procédé selon l'une quelconque des revendications 1 6, caractérisé en ce que le premier N, N-dialkylamide répond à la formule :

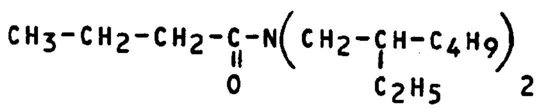 (III)

et en ce que le second N, N-dialkylamide répond à la formule :

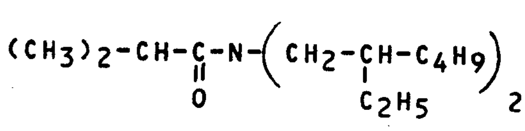 (IV)

8. Procédé selon l'une quelconque des revendications 1 à 7, caractérisé en ce que le rapport molaire du premier N, N-dialkylamide au second N, N-dialkylamide est de 0,1 à 10.

9. Procédé selon l'une quelconque des revendications 1 à 8, caractérisé en ce que la concentration totale en N, N-dialkylamides du solvant organique est de 0,2 à 1,7 mol/l.

## Patentansprüche

1. Verfahren zur Abtrennung von Uran (VI) und/oder Plutonium (IV) ausgehend von einer wässerigen Lösung, **dadurch gekennzeichnet,** daß
   1.) die wässerige Lösung mit einem organischen Lösungsmittel zusammengebracht wird, welches umfaßt:
   ein erstes N,N-Dialkylamid der Formel:

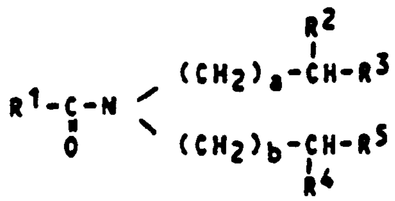

(I)

worin $R^1$ ein linearer Alkylrest mit 1 bis 12 Kohlenstoffatomen oder ein H-Rest ist, $R^2$ und $R^4$, die gleich oder verschieden sind, lineare oder verzweigte Alkylreste mit 2 bis 4 Kohlenstoffatomen sind, $R^3$ und $R^5$, die gleich oder verschieden sind, lineare oder verzweigte Alkylreste mit 1 bis 6 Kohlenstoffatomen sind, und a und b, die gleich oder verschieden sind, ganze Zahlen von 1 bis 6 sind, und
ein zweites N,N-Dialkylamid der Formel:

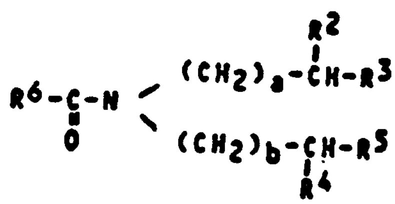

(II)

worin $R^2$, $R^3$, $R^4$, $R^5$, a und b die oben angegebene Bedeutung haben und $R^6$ ein verzweigter Alkylrest mit 3 bis 12 Kohlenstoffatomen ist, und
2.) das organische Lösungsmittel, welches das Uran (VI) und/oder das Plutonium (IV) enthält, von der wässerigen Lösung abgetrennt wird.

2. Verfahren nach Anspruch 1, **dadurch gekennzeichnet,** daß die wässerige Lösung eine salpetersaure Lösung ist.

3. Verfahren nach Anspruch 2, **dadurch gekennzeichnet,** daß die wässerige Lösung Uran (VI) und Plutonium (IV) umfaßt, und dadurch, daß die Salpetersäurekonzentration der wässerigen Lösung auf einen Wert von 2 bis 8 Mol/l eingestellt wird, um gleichzeitig das Uran (VI) und das Plutonium (IV) in das organische Lösungsmittel zu extrahieren.

4. Verfahren nach Anspruch 2, **dadurch gekennzeichnet,** daß die wässerige Lösung Uran (VI) und Plutonium (IV) enthält, und daß die Salpetersäurekonzentration dieser Lösung auf einen Wert von 0,1 bis 2 Mol/l eingestellt wird, um selektiv das Uran (VI) in das organische Lösungsmittel zu extrahieren und es von dem Plutonium (IV) zu trennen.

5. Verfahren zur Behandlung einer wässerigen salpetersauren Lösung, die Uran (VI), Plutonium (IV) und Spaltprodukte enthält, **dadurch gekennzeichnet,** daß es die folgenden nacheinander erfolgenden Schritte umfaßt:
   1.) gleichzeitige Extraktion des Urans (VI) und des Plutoniums (IV) in ein organisches Lösungsmittel, welches umfaßt:
   ein erstes N,N-Dialkylamid der Formel:

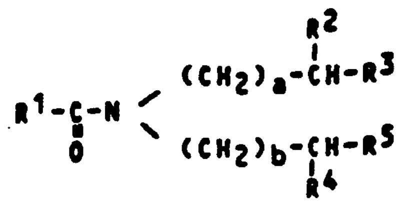

(I)

worin $R^1$ ein linearer Alkylrest mit 1 bis 12 Kohlenstoffatomen oder ein H-Rest ist, $R^2$ und $R^4$, die gleich oder verschieden sind, lineare oder verzweigte Alkylreste mit 2 bis 4 Kohlenstoffatomen sind, $R^3$ und $R^5$, die gleich oder verschieden sind, lineare oder verzweigte Alkylreste mit 1 bis 6 Kohlenstoffatomen sind, und a und b, die gleich oder verschieden sind, ganze Zahlen von 1 bis 6 sind, und

ein zweites N,N-Dialkylamid der Formel:

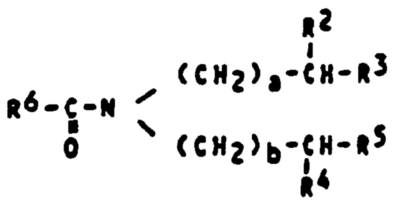

(II)

worin $R^2$, $R^3$, $R^4$, $R^5$, a und b die oben angegebene Bedeutung haben und $R^6$ ein verzweigter Alkylrest mit 3 bis 12 Kohlenstoffatomen ist, und

2.) Abtrennung des in dem am Ende des ersten Schrittes erhaltenen organischen Lösungsmittel vorhandenen Plutoniums durch Zusammenbringen dieses Lösungsmittels mit einer wässerigen salpetersauren Lösung mit einer Salpetersäurekonzentration von 0,1 bis 2 Mol/l, um das Plutonium in die wässerige salpetersaure Lösung zurückzuextrahieren.

6. Verfahren nach Anspruch 5, **dadurch gekennzeichnet,** daß es einen dritten Schritt der Rückextraktion des Urans in eine wässerige Lösung durch Zusammenbringen des am Ende des zweiten Schrittes erhaltenen organischen Lösungsmittels mit einer wässerigen salpetersauren Lösung mit einer Salpetersäurekonzentration von 0 bis 0,2 Mol/l umfaßt.

7. Verfahren nach einem der Ansprüche 1 bis 6, **dadurch gekennzeichnet,** daß das erste N,N-Dialkylamid der Formel entspricht:

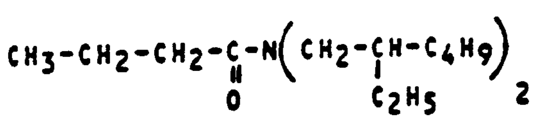

(III)

und daß das zweite N,N-Dialkylamid der Formel entspricht:

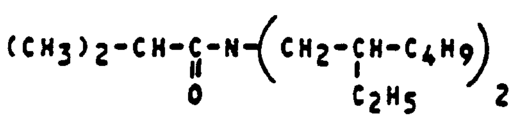

(IV)

8. Verfahren nach einem der Ansprüche 1 bis 7, **dadurch gekennzeichnet,** daß das Molverhältnis des ersten N,N-Dialkylamids zum zweiten N,N-Dialkylamid 0,1 bis 10 beträgt.

9. Verfahren nach einem der Ansprüche 1 bis 8, **dadurch gekennzeichnet,** daß die Gesamtkonzentration an N,N-Dialkylamiden des organischen Lösungsmittels 0,2 bis 1,7 Mol/l beträgt.

## Claims

1. Process for the separation of uranium (VI) and/or plutonium (IV) from an aqueous solution, which is characterized in that:
   1) the aqueous solution is contacted with an organic solvent comprising:
   a first N,N-dialkyl amide of formula:

   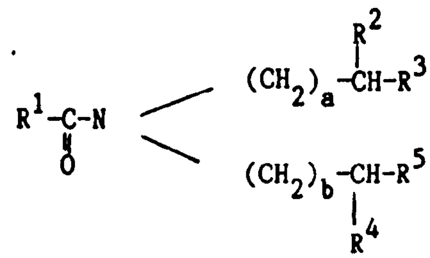 (I)

   in which $R^1$ is a straight-chain alkyl radical with 1 to 12 carbon atoms or a H radical, $R^2$ and $R^4$, which can be the same or different, are straight or branched alkyl radicals with 2 to 4 carbon atoms, $R^3$ and $R^5$, which can be the same or different, are straight or branched alkyl radicals with 1 to 6 carbon atoms and a and b, which can be the same or different, are integers between 1 and 6,and
   a second N,N-dialkyl amide of formula:

   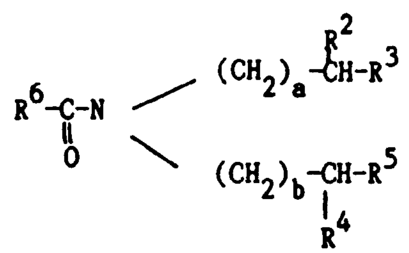 (II)

   in which $R^2$, $R^3$, $R^4$, $R^5$ a and b have the meanings given hereinbefore and $R^6$ is a branched alkyl radical with 3 to 12 carbon atoms, and
   2) the organic solvent containing the uranium (VI) and/or the plutonium (IV) is separated from the aqueous solution.

2. Process according to claim 1, characterized in that the aqueous solution is a nitric solution.

3. Process according to claim 2, characterized in that the aqueous solution comprises uranium (VI) and plutonium (IV) and in that the nitric acid concentration of the aqueous solution is adjusted to a value of 2 to 8 mole/l for simultaneously extracting uranium (VI) and plutonium (IV) in the organic solvent.

4. Process according to claim 2, characterized in that the aqueous solution contains uranium (VI) and plutonium (IV) and in that the nitric acid concentration of said solution is adjusted to a value of 0.1 to 2 mole/l for selectively extracting uranium (VI) in the organic solvent and separating it from plutonium (IV).

5. Process for the treatment of a nitric aqueous solution containing uranium (VI), plutonium (IV) and fission products, characterized in that it comprises the following successive stages:
   1) simultaneous extraction of uranium (VI) and plutonium (IV) in an organic solvent comprising:
   a first N,N-dialkyl amide of formula:

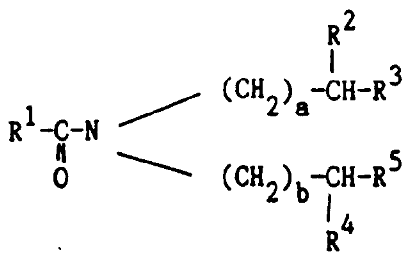

(I)

in which $R^1$ is a straight-chain alkyl radical with 1 to 12 carbon atoms or a H radical, $R^2$ and $R^4$, which are the same or different, are straight or branched alkyl radicals with 2 to 4 carbon atoms, $R^3$ and $R^5$, which are the same or different, are straight or branched alkyl radicals with 1 to 6 carbon atoms and a and b, which are the same or different, are integers from 1 to 6 and
a second N,N-dialkyl amide of formula:

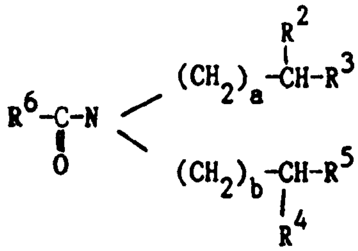

(II)

in which $R^2$, $R^3$, $R^4$, $R^5$ a and b have the meanings given hereinbefore and $R^6$ is a branched alkyl radical with 3 to 12 carbon atoms and
2) separation of the plutonium present in the organic solvent obtained at the end of the first stage by contacting said solvent with a nitric aqueous solution having a nitric acid concentration of 0.1 to 2 mole/l for reextracting the plutonium in the nitric aqueous solution.

**6.** Process according to claim 5, characterized in that it comprises a third stage of reextracting the uranium in an aqueous solution by contacting the organic solvent obtained at the end of the second stage with a nitric aqueous solution having a nitric acid concentration of 0 to 0.2 mole/l.

**7.** Process according to one of the claims 1 to 6, characterized in that the first N,N-dialkyl amide complies with the formula:

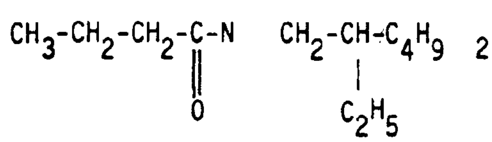

(III)

and in that the second N,N-dialkyl amide complies with the formula:

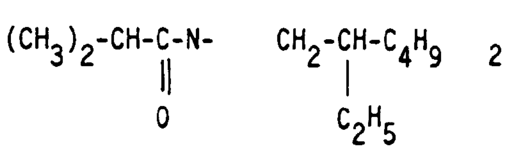

(IV)

**8.** Process according to one of the claims 1 to 7, characterized in that the molar ratio of the first N,N-dialkyl amide to the second N,N-dialkyl amide is 0.1 to 10.

**9.** Process according to one of the claims 1 to 8, characterized in that the total concentration of N,N-dialkyl amides of the organic solvent is 0.2 to 1.7 mole/l.

FIG. 1

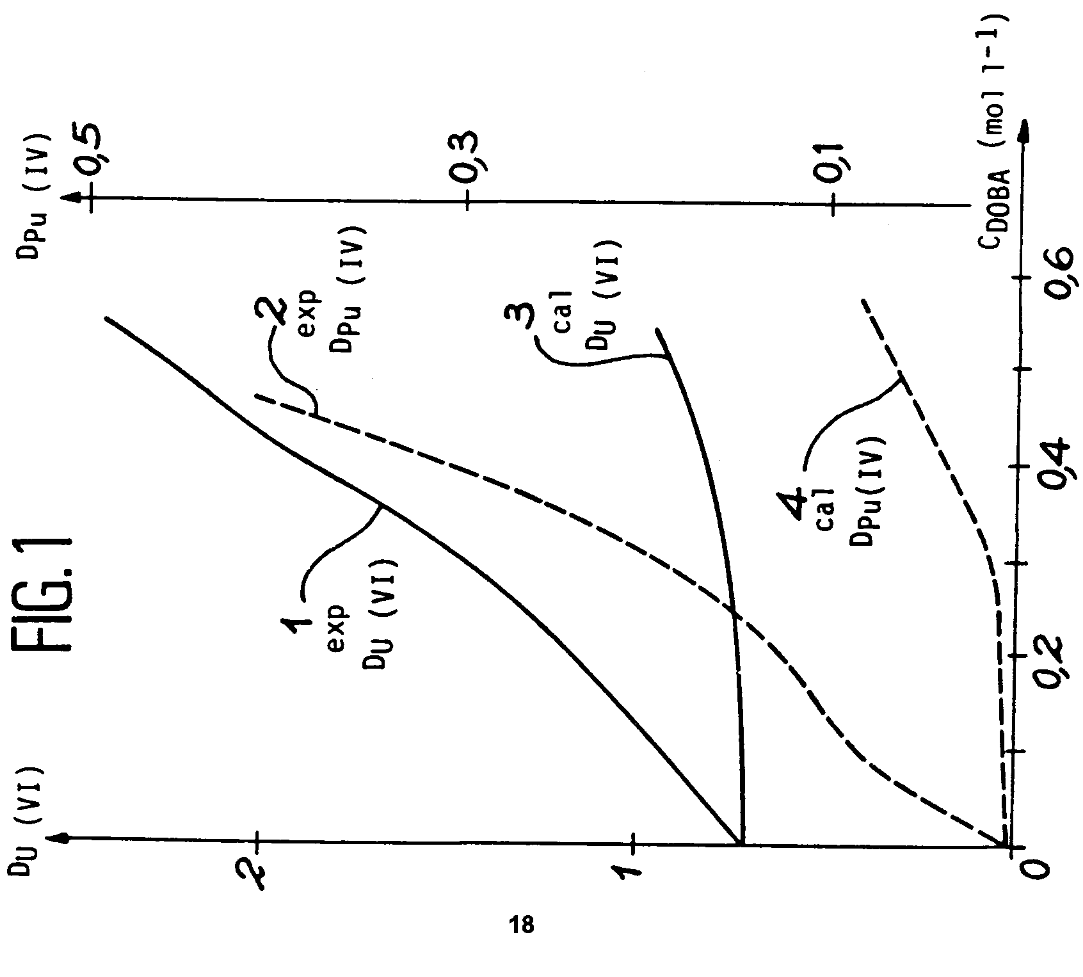
$D_U$ (VI)
$D_{Pu}$ (IV)
2
1
0
0,2
0,4
0,6
0,5
0,3
0,1
$C_{DOBA}$ (mol l-1)
1 exp $D_U$ (VI)
2 exp $D_{Pu}$ (IV)
3 cal $D_U$ (VI)
4 cal $D_{Pu}$(IV)

FIG. 2

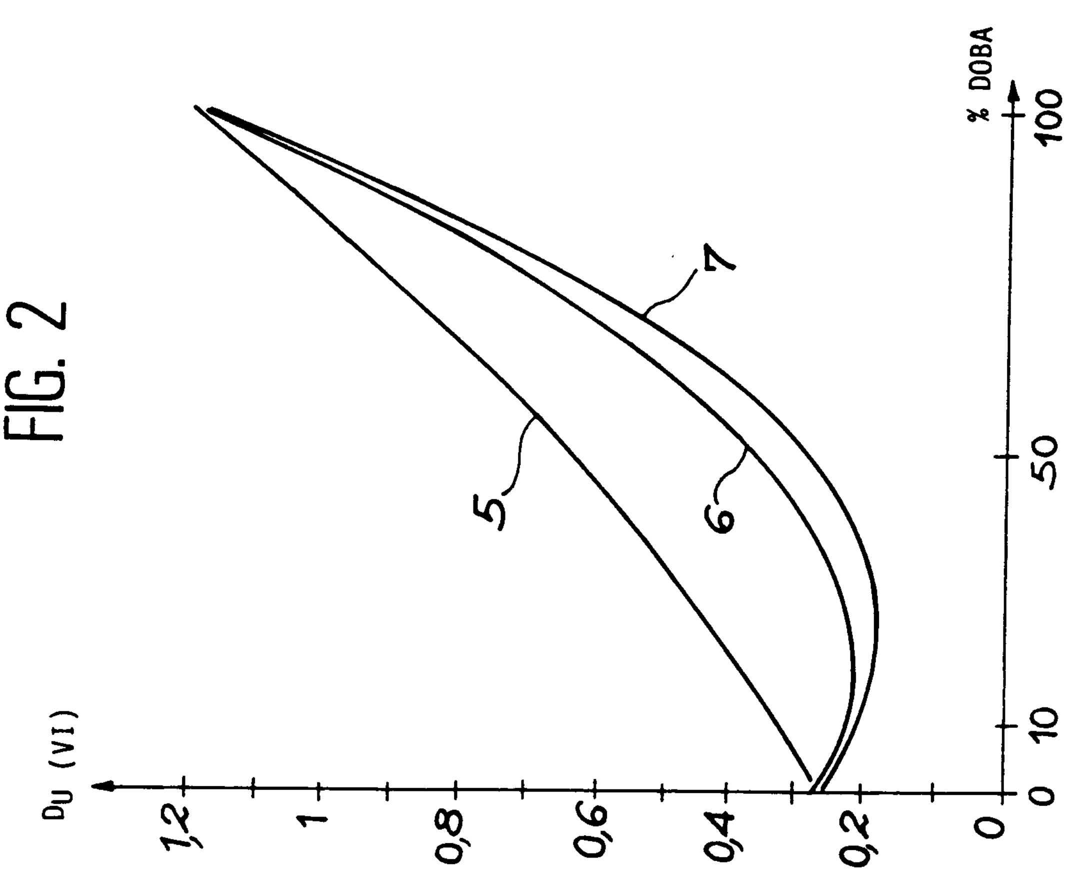
$D_U$ (VI)
1,2
1
0,8
0,6
0,4
0,2
0
0
10
50
100
% DOBA
5
6
7

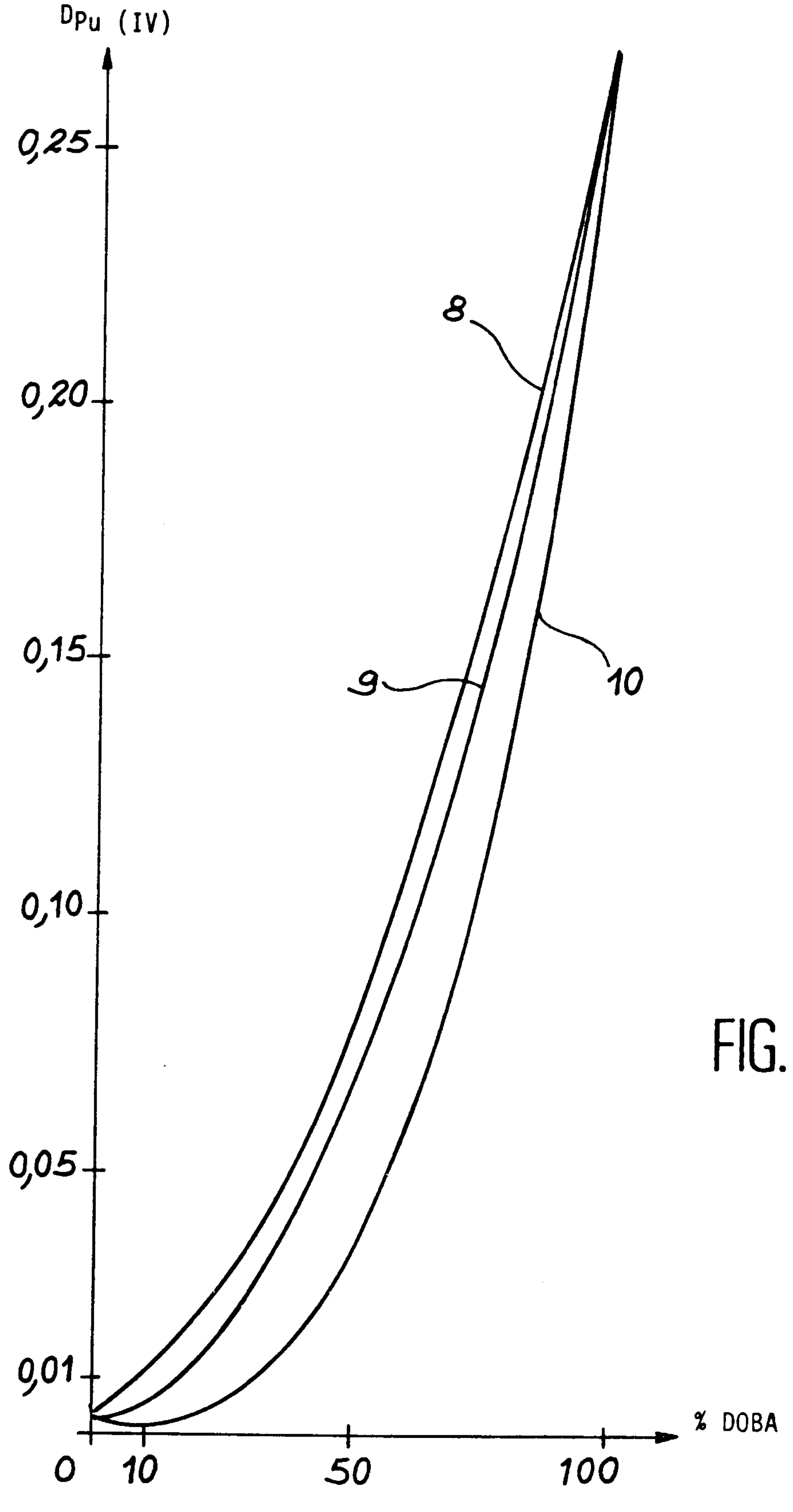


FIG. 3

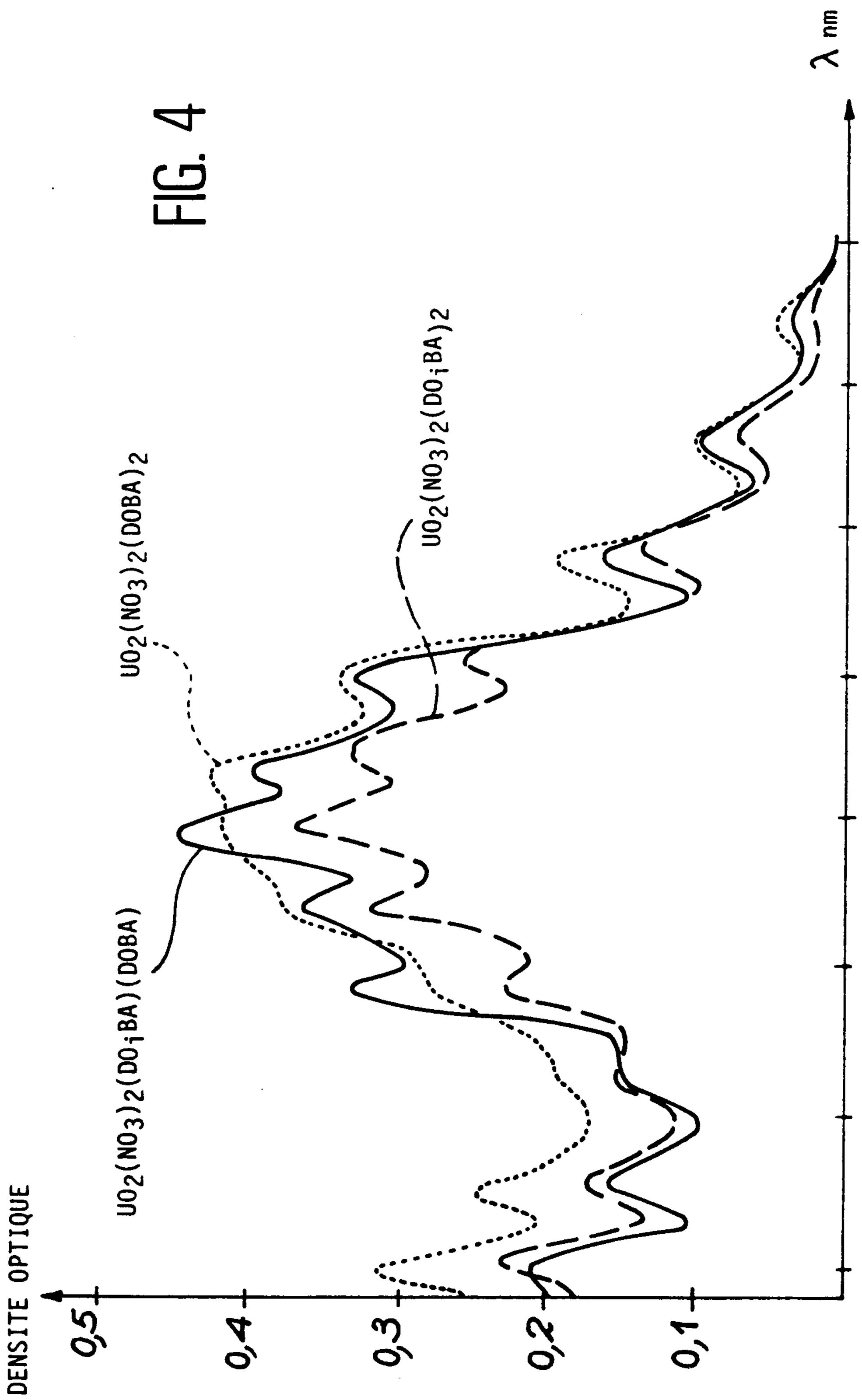
DENSITE OPTIQUE
0,5
0,4
0,3
0,2
0,1
360
380
400
420
440
460
480
500
λ nm
$UO_2(NO_3)_2(DO_iBA)(DOBA)$
$UO_2(NO_3)_2(DOBA)_2$
$UO_2(NO_3)_2(DO_iBA)_2$

FIG. 4

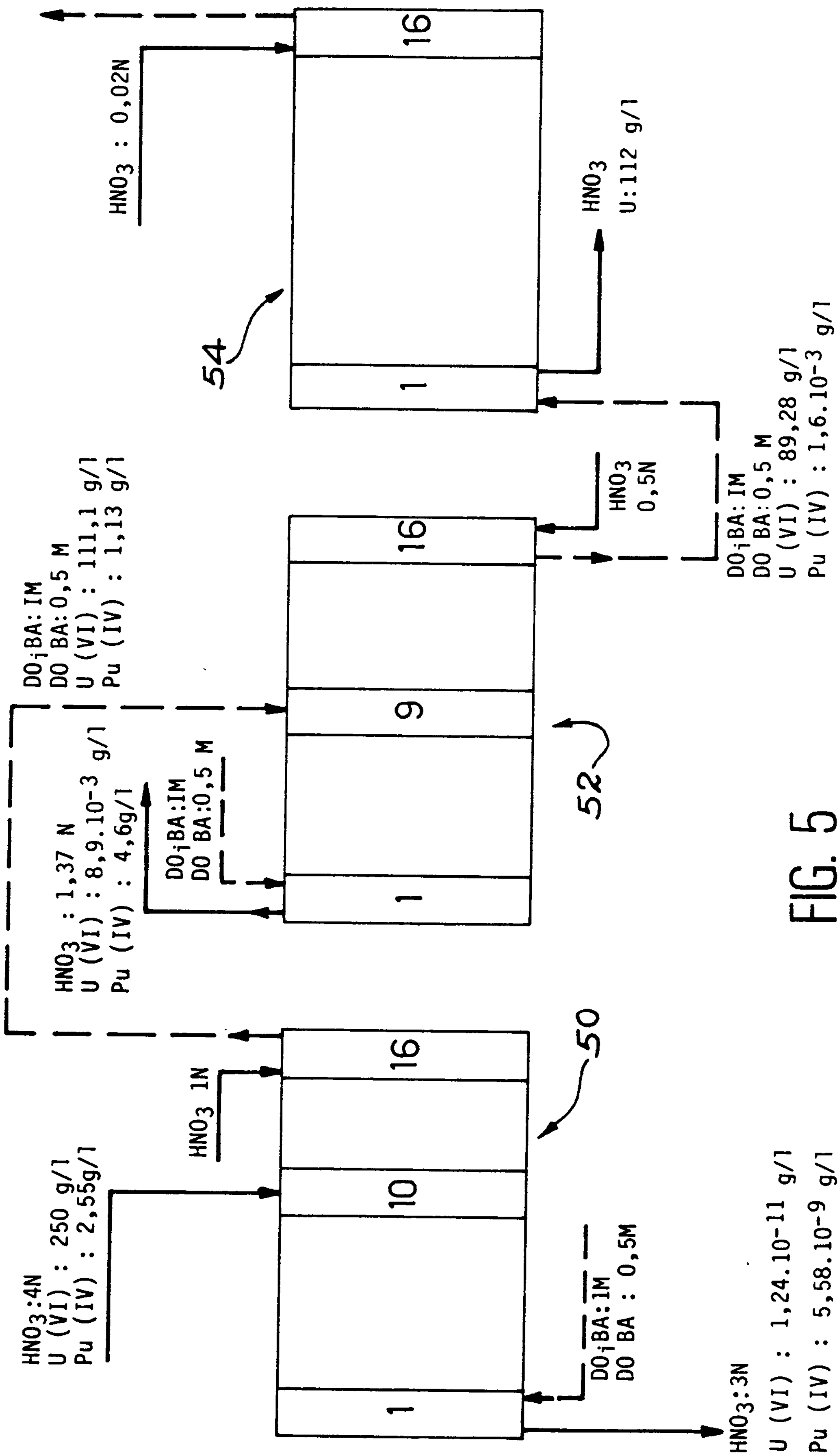
HNO3:4N
U (VI) : 250 g/l
Pu (IV) : 2,55g/l
HNO3 1N
DO;BA:IM
DO BA : 0,5M
HNO3:3N
U (VI) : 1,24.10-11 g/l
Pu (IV) : 5,58.10-9 g/l
HNO3 : 1,37 N
U (VI) : 8,9.10-3 g/l
Pu (IV) : 4,6g/l
DO;BA:IM
DO BA:0,5 M
DO;BA:IM
DO BA:0,5 M
U (VI) : 111,1 g/l
Pu (IV) : 1,13 g/l
HNO3
0,5N
DO;BA:IM
DO BA:0,5 M
U (VI) : 89,28 g/l
Pu (IV) : 1,6.10-3 g/l
HNO3 : 0,02N
HNO3
U:112 g/l
50
52
54
1
10
16
1
9
16
1
16

FIG. 5

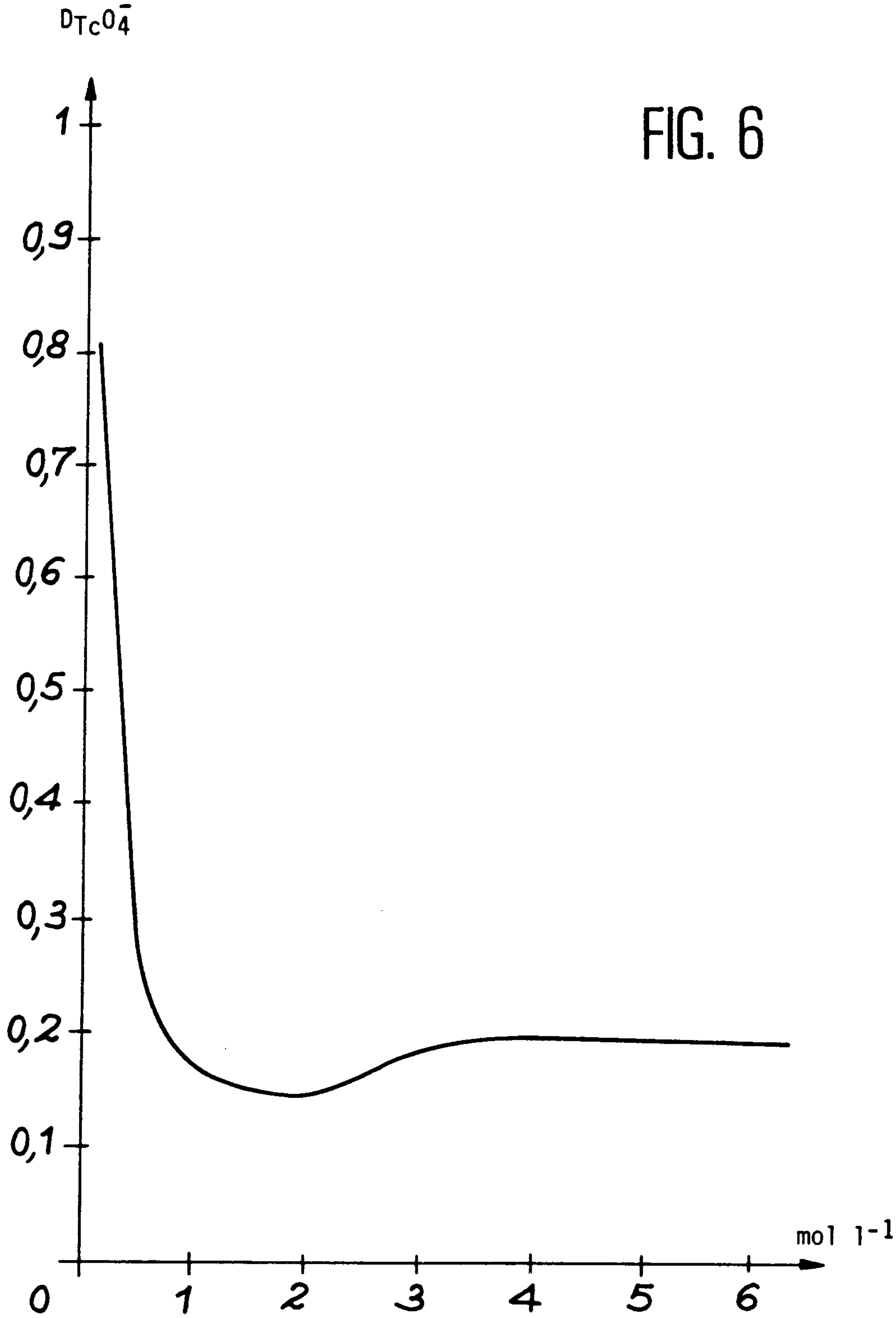


FIG. 6

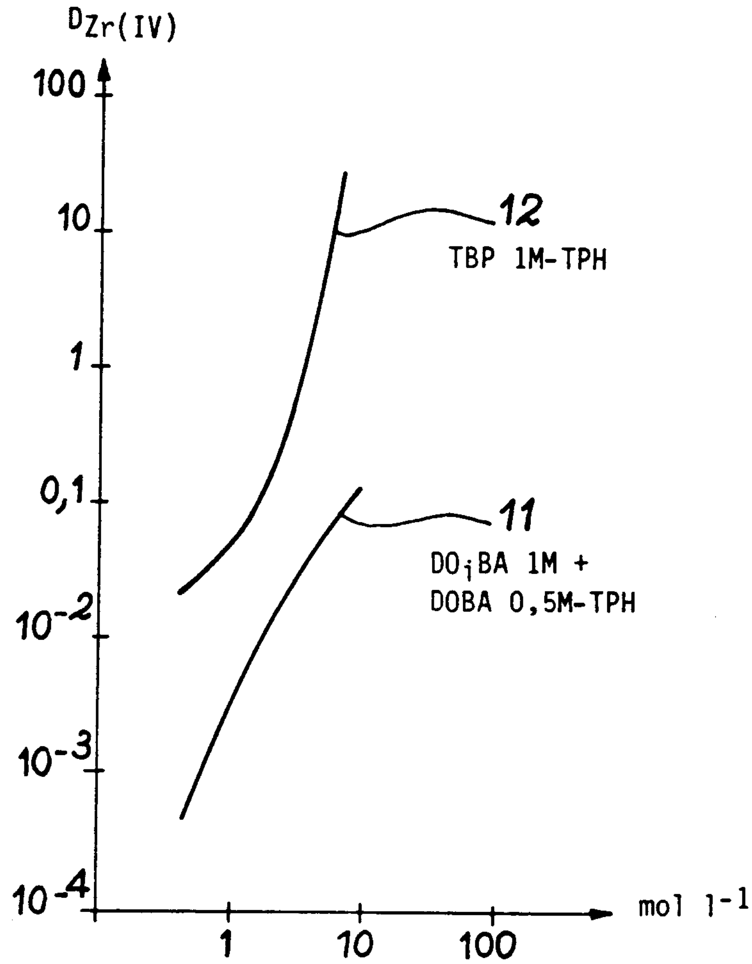

$D_{Zr(IV)}$
100
10
1
0,1
$10^{-2}$
$10^{-3}$
$10^{-4}$
1
10
100
mol l-1
12
TBP 1M-TPH
11
DO;BA 1M +
DOBA 0,5M-TPH


FIG. 7

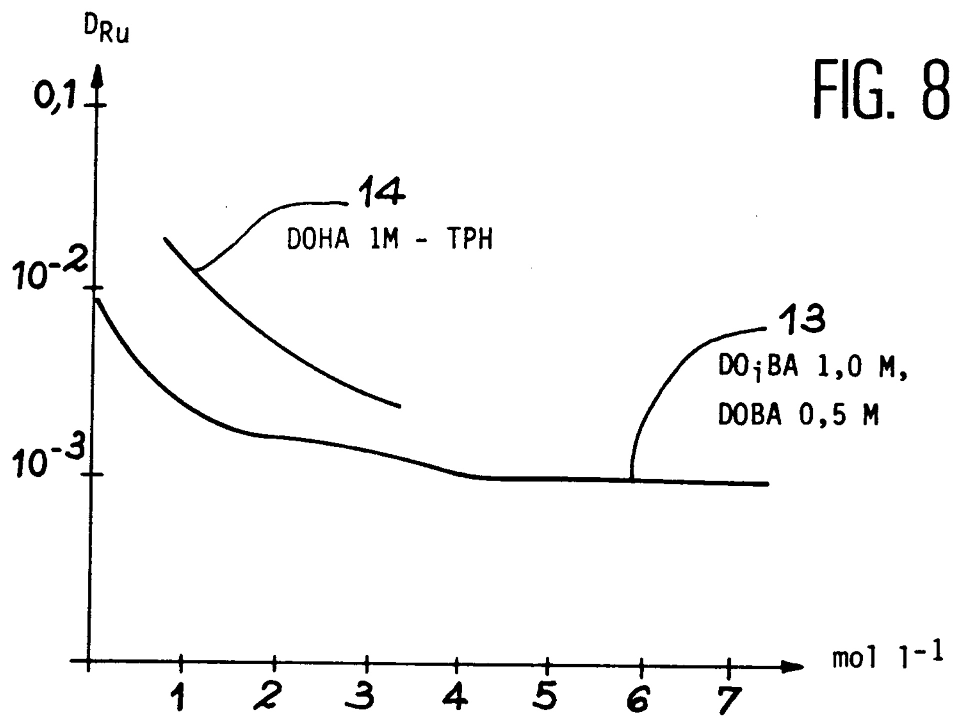

$D_{Ru}$
0,1
$10^{-2}$
$10^{-3}$
1
2
3
4
5
6
7
mol l-1
14
DOHA 1M - TPH
13
DO;BA 1,0 M,
DOBA 0,5 M


FIG. 8